# EUROPÄISCHE PATENTSCHRIFT

(11) **EP 2 483 578 B1**
(45) Veröffentlichungstag und Bekanntmachung des Hinweises auf die Patenterteilung: **26.11.2014**
(21) Anmeldenummer: 10752787.1
(22) Anmeldetag: 07.09.2010
(51) Int. Cl.: F16H 61/70, F16H 61/04, B60W 10/02, B60W 30/18, B60W 10/10

(54) **VERFAHREN ZUM BETREIBEN EINES ANTRIEBSSTRANGS**
METHOD FOR OPERATING A DRIVE TRAIN
PROCÉDÉ POUR FAIRE FONCTIONNER UNE CHAÎNE CINÉMATIQUE

(30) Priorität: 01.10.2009 DE 102009045256
(43) Veröffentlichungstag der Anmeldung: 08.08.2012
(73) Patentinhaber: ZF Friedrichshafen AG, 88038 Friedrichshafen (DE)
(72) Erfinder: WÜRTHNER, Maik, 88677 Markdorf (DE); SAUTER, Ingo, 88074 Meckenbeuren (DE); STAUDINGER, Joachim, 88214 Ravensburg (DE); KEMLER, Johannes, 88697 Bermatingen (DE)
(86) Internationale Anmeldenummer: PCT/EP2010/063079
(87) Internationale Veröffentlichungsnummer: WO 2011/039032

(56) Entgegenhaltungen:
- EP-A1- 0 651 180
- DE-A1-102004 055 857
- DE-A1-102005 049 198
- DE-A1-102007 043 695
- DE-A1-102007 055 720

## Beschreibung

Die Erfindung betrifft ein Verfahren zum Betreiben eines Antriebsstrangs, der zumindest ein Antriebsaggregat und ein automatisiertes Schaltgetriebe aufweist.

Als Gruppengetriebe ausgebildete, automatisierte Schaltgetriebe mit einem mehrstufigen Hauptgetriebe und einer dem Hauptgetriebe antriebstechnisch nachgeschalteten, insbesondere als Bereichsgruppe ausgeführten Nachschaltgruppe sowie gegebenenfalls einer dem Hauptgetriebe antriebstechnisch vorgeschalteten, insbesondere als Splitgruppe ausgeführten Vorschaltgruppe sind seit längerem bekannt und kommen bevorzugt in Nutzfahrzeugen zur Anwendung. Durch eine beispielsweise zweistufig ausgeführte Splitgruppe mit einem in etwa der Hälfte eines mittleren Übersetzungssprungs zwischen zwei aufeinander folgenden Übersetzungsstufen des Hauptgetriebes entsprechenden Übersetzungssprung werden die Übersetzungssprünge des Hauptgetriebes halbiert und die Anzahl der insgesamt zur Verfügung stehenden Gänge des Gruppengetriebes verdoppelt. Durch eine beispielsweise zweistufige Bereichsgruppe mit einem in etwa um einen mittleren Übersetzungssprung zwischen zwei aufeinander folgenden Übersetzungsstufen des Hauptgetriebes über dem gesamten Übersetzungssprung des Hauptgetriebes liegenden Übersetzungssprung wird die Spreizung des Gruppengetriebes in etwa verdoppelt und die Anzahl der insgesamt zur Verfügung stehenden Gänge nochmals verdoppelt.

Die Splitgruppe kann dem Hauptgetriebe vor- oder nachgeschaltet und demnach als Vorschaltgruppe oder Nachschaltgruppe ausgeführt sein. Ebenso kann die Bereichsgruppe dem Hauptgetriebe vor- oder nachgeschaltet und demnach als Vorschaltgruppe oder Nachschaltgruppe ausgeführt sein. Automatisierte Schaltgetriebe, die formschlüssig arbeitende Schaltelemente aufweisen, sind von automatischen Lastschaltgetrieben mit reibschlüssig arbeitenden Schaltelementen zu unterscheiden.

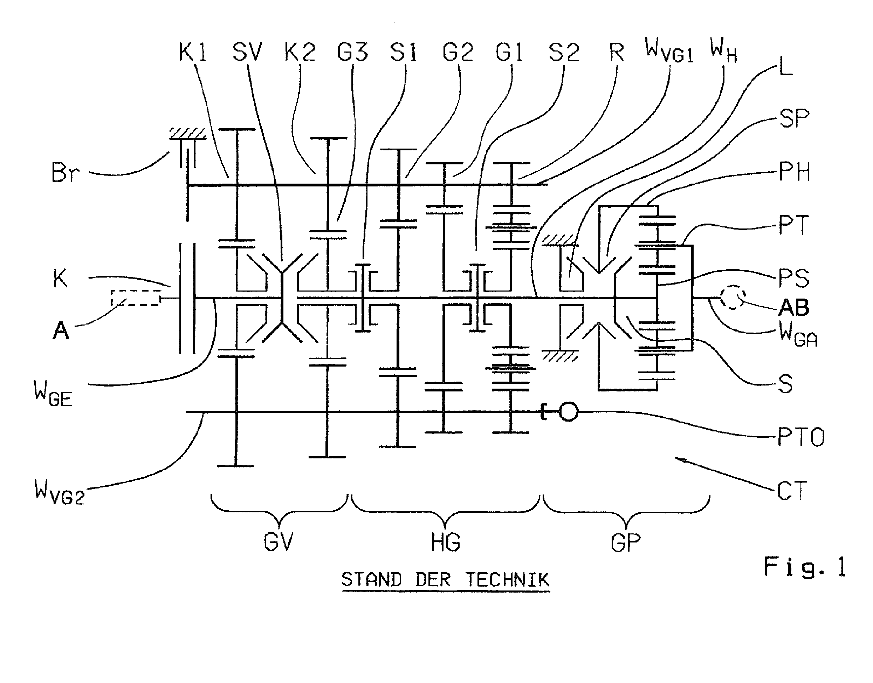

Fig. 1 zeigt ein Schema eines von der Anmelderin stammenden Gruppengetriebes CT der sogenannten AS-Tronic-Familie zusammen mit einem Antreibsaggrat A und einem Achsantrieb AB. Das in Fig. 1 dargestellte Gruppengetriebe CT umfasst ein Hauptgetriebe HG, eine dem Hauptgetriebe HG antriebstechnisch vorgeschaltete, als Splitgruppe GV ausgeführte Vorschaltgruppe sowie eine dem Hauptgetriebe HG antriebstechnisch nachgeschaltete, als Bereichsgruppe GP ausgeführte Nachschaltgruppe. Das Hauptgetriebe HG des Gruppengetriebes CT der Fig. 1 ist als Direktganggetriebe in Vorgelegebauweise ausgeführt und weist eine Hauptwelle W_{H} und zwei Vorgelegewellen W_{VG1} und W_{VG2} auf, wobei die erste Vorgelegewelle W_{VG1} mit einer steuerbaren Getriebebremse Br versehen ist.

Das Hauptgetriebe HG ist mit drei Übersetzungsstufen G1, G2 und G3 für eine Vorwärtsfahrt und einer Übersetzungsstufe R für eine Rückwärtsfahrt dreistufig ausgebildet. Losräder der Übersetzungsstufen G1, G2 und R sind jeweils drehbar auf der Hauptwelle W_{H} gelagert und über zugeordnete Klauenkupplungen schaltbar. Die zugeordneten Festräder sind drehfest auf den Vorgelegewellen W_{VG1} und W_{VG2} angeordnet. Die als Direktgang ausgebildete höchste Übersetzungsstufe G3 des Hauptgetriebes HG ist über eine Direktschaltkupplung schaltbar. Die Schaltkupplungen der Übersetzungsstufen G3 und G2 sowie die Schaltkupplungen der Übersetzungsstufen G1 und R sind jeweils als Klauenkupplungen ausgebildet und in einem gemeinsamen Schaltpaket S1 bzw. S2 zusammengefasst.

Die als Splitgruppe GV ausgeführte Vorschaltgruppe des Gruppengetriebes CT der Fig. 1 ist zweistufig ausgebildet und ebenfalls in Vorgelegebauweise ausgeführt, wobei die beiden Übersetzungsstufen K1 und K2 der Vorschaltgruppe GV zwei schaltbare Eingangskonstanten des Hauptgetriebes HG bilden. Durch eine geringere Übersetzungsdifferenz der beiden Übersetzungsstufen K1, K2 ist die Vorschaltgruppe GV als Splitgruppe ausgelegt.

Das Losrad der ersten Übersetzungsstufe K1 ist drehbar auf der Eingangswelle W_{GE} gelagert, die über eine steuerbare Trennkupplung K mit dem gestrichelt gezeichneten, als Verbrennungsmotor ausgebildeten und nicht zum Gruppengetriebe gehörenden Antriebsaggregat A in Verbindung steht.

Das Losrad der zweiten Übersetzungsstufe K2 ist drehbar auf der Hauptwelle W_{H} gelagert. Die Festräder beider Übersetzungsstufen K1, K2 der Vorschaltgruppe GV sind jeweils drehfest mit den eingangsseitig verlängerten Vorgelegewellen W_{VG1} und W_{VG2} des Hauptgetriebes angeordnet. Die synchronisierten und als Klauenkupplungen ausgebildeten Schaltkupplungen der Vorschaltgruppe GV sind in einem gemeinsamen Schaltpaket SV zusammengefasst.

Die dem Hauptgetriebe HG nachgeordnete, als Bereichsgruppe GP ausgeführte Nachschaltgruppe des Gruppengetriebes CT der Fig. 1 ist ebenfalls zweistufig ausgebildet, jedoch in Planetenbauweise mit einem einfachen Planetenradsatz. Das Sonnenrad PS ist drehfest mit der ausgangsseitig verlängerten Hauptwelle W_{H} des Hauptgetriebes HG verbunden. Der Planetenträger PT ist drehfest mit der Ausgangswelle W_{GA} des Gruppengetriebes CT gekoppelt, die mit einem gestrichelt gezeichneten Achsantrieb AB in Verbindung steht. Das Hohlrad PH steht mit einem Schaltpaket SP mit zwei synchronisierten, als Klauenkupplungen ausgebildeten Schaltkupplungen in Verbindung, durch welche die Bereichsgruppe GP wechselweise durch die Verbindung des Hohlrads PH mit einem feststehenden Gehäuseteil in eine Langsamfahrstufe L und durch die Verbindung des Hohlrads PH mit der Hauptwelle W_{H} bzw. dem Sonnenrad PS in eine Schnellfahrstufe S schaltbar ist. Die Bereichsgruppe GP ist synchronisiert schaltbar.

An der Vorgelegewelle W_{VG2} des Gruppengetriebes CT kann zum Antreiben eines Nebenabtriebs PTO Leistung abgezweigt werden.

Ein solches Gruppengetriebe ist z.B. aus der DE 10 2007 010 829 A1 bekannt, wobei dieser Stand der Technik weiterhin ein Gruppengetriebe mit einen vierstufigen Hauptgetriebe zeigt.

Das Hauptgetriebe HG eines solchen Gruppengetriebes CT ist als unsynchronisiertes Hauptgetriebe ausgeführt, wohingegen die als Bereichsgruppe GP ausgeführt Nachschaltgruppe sowie die als Splitgruppe GV ausgeführte Vorschaltgruppe als synchronisierte Getriebeteile ausgelegt sind. In diesem Fall muss bei Ausführung einer Schaltung abhängig von der herrschenden Drehzahldifferenz der Getriebeeingang bzw. die Eingangswelle W_{GE} des Gruppengetriebes CT auf eine erforderliche Drehzahl beschleunigt oder abgebremst werden, wobei das Abbremsen mithilfe der Getriebebremse Br und das Beschleunigen durch gezielte Ansteuerung des Antriebsaggregats A bei geschlossener Trennkupplung K erfolgt. Für diesen Synchronisationsvorgang wird dann das Hauptgetriebe HG in eine definierte Neutralposition überführt.

Soll nun bei einem fahrenden Fahrzeug, dessen Hauptgetriebe HG des Gruppengetriebes CT die Neutralposition einnimmt, im Hauptgetriebe bzw. Gruppengetriebe wieder ein Gang eingelegt werden, so ist hierzu in der Regel eine Unterstützung durch das Antriebsaggregat A erforderlich. In diesem Fall wird nämlich die Ausgangswelle W_{GA} des Gruppengetriebes CT aufgrund der Fahrzeuggeschwindigkeit drehend angetrieben, sodass zur Herstellung einer Synchronbedingung auch die Getriebeeingangswelle W_{GE} angetrieben werden muss.

Dann, wenn das Antriebsaggregat A gestört ist, zum Beispiel stillsteht oder nicht mehr angesteuert werden kann, kann über das Antriebsaggregat A dann keine Motorunterstützung mehr zur Herstellung der Synchronbedingung bereitgestellt werden, sodass dann nach dem Stand der Technik ein Gangeinlegen nicht mehr möglich ist.

Es besteht daher Bedarf an einem Verfahren zum Betreiben eines Antriebsstrangs mit einem Gruppengetriebe, mithilfe dessen bei fahrendem Fahrzeug mit einem sich in Neutralposition befindenden Hauptgetriebe HG auch ohne Motorunterstützung über das Antriebsaggregat A ein Gang im Gruppengetriebe CT eingelegt werden kann.

Ein Verfahren gemäß dem Oberbegriff des Patentanspruchs 1 ist aus der DE 10 2004 005 857 A1 bekannt.

Hiervon ausgehend liegt der vorliegenden Erfindung das Problem zu Grunde, ein neuartiges Verfahren zum Betreiben eines Antriebsstrangs eines Kraftfahrzeugs zu schaffen.

Dieses Problem wird durch ein Verfahren gemäß Anspruch 1 gelöst. Dann, wenn bei fahrendem Kraftfahrzeug das Hauptgetriebe eine Neutralposition einnimmt und wenn am Antriebsaggregat eine Störung, insbesondere ein Stillstand oder eine Nichtansteuerbarkeit des Antriebsaggregats, festgestellt wird, wird zum Einlegen eines Gangs einerseits die Nachschaltgruppe in eine Position überführt, in welcher die Nachschaltgruppe kraftflussfrei ist, sodass die Nachschaltgruppe auslaufen kann, wobei andererseits ein Schaltzylinder des Hauptgetriebes mit einem Schaltimpuls beaufschlagt wird, sodass als Klauen ausgebildete Schaltelemente des Hauptgetriebes solange übereinander ratschen, bis dieselben auf Grund einer sich verringernden Drehzahldifferenz einspuren und so das Hauptgetriebe schließen, und wobei dann, wenn das Hauptgetriebe geschlossen ist, die Nachschaltgruppe wieder in eine nichtkraftflussfreie Position überführt wird.

Erfindungsgemäß wird die Trennkupplung erst dann geöffnet, wenn das Hauptgetriebe bereits geschlossen ist, sodass das Schließen des Hauptgetriebes über das Ratschen und nachfolgende Einspuren der Schaltelemente des Hauptgetriebes bei geschlossener Trennkupplung und bei kraftflussfreier Nachschaltgruppe erfolgt.

Mit dem erfindungsgemäßen Verfahren ist es möglich, dann, wenn ein Fahrzeug mit Gruppengetriebe fährt und das unsynchronisierte Hauptgetriebe des Gruppengetriebes die Neutralposition einnimmt, im unsynchronisierten Hauptgetriebe HG und damit Gruppengetriebe auch dann wieder einen Gang aus der Neutralposition des Hauptgetriebes heraus einzulegen, wenn das Antriebsaggregat A zur Motorunterstützung nicht zur Verfügung steht.

Nach einer vorteilhaften Weiterbildung der Erfindung wird nach dem Schließen des Hauptgetriebes die Nachschaltgruppe in eine Schnellfahrstufe geschaltet, nämlich derart, dass die Nachschaltgruppe zunächst in Richtung auf eine Langsamfahrstufe betätigt wird, wobei hierbei eine Getriebeeingangsdrehzahl überwacht wird, und wobei dann, wenn die Getriebeeingangsdrehzahl einen Grenzwert erreicht bzw. überschreitet, die Betätigung der Nachschaltgruppe in Richtung auf die Langsamfahrstufe abgebrochen und anschließend die Nachschaltgruppe in Richtung auf die Schnellfahrstufe betätigt wird. Mit dieser vorteilhaften Weiterbildung der Erfindung ist es möglich, auch dann sicher insbesondere bei hohen Fahrgeschwindigkeiten die Nachschaltgruppe in die Schnellfahrstufe zu schalten, wenn dieselbe eine sogenannte 2-Quadranten-Synchroniserung nutzt, die nur in eine Drehrichtung wirkt.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: ein Schema eines aus dem Stand der Technik bekannten, als Gruppengetriebe ausgebildeten Getriebes eines Kraftfahrzeugs zusammen mit einem Antriebsaggregat und einem Achsantrieb.

Die Erfindung betrifft ein Verfahren zum Betreiben eines Antriebsstrangs eines Kraftfahrzeugs, insbesondere eines Antriebsstrangs, der neben einem Antriebsaggregat A das in Fig. 1 gezeigte und bereits beschriebene, automatisierte Gruppengetriebes CT mit dem unsynchronisierten Hauptgetriebe HG, der dem Hauptgetriebe HG antriebstechnisch vorgeschalteten, als Splitgruppe GV ausgeführten, synchronisierten Vorschaltgruppe und der dem Hauptgetriebe HG antriebstechnisch nachgeschalteten, als Bereichsgruppe GP ausgeführten, synchronisierten Nachschaltgruppe umfasst.

Obwohl die Erfindung im Zusammenhang mit diesem Gruppengetriebe CT beschrieben ist, soll deren Anwendung nicht auf ein solches Gruppengetriebe beschränkt sein, sondern auch bei Gruppengetrieben ohne Vorschaltgruppe oder bei Gruppengetrieben mit einer als Splitgruppe ausgebildeten Nachschaltgruppe zum Einsatz kommen können.

Die hier vorliegende Erfindung betrifft nun solche Details eines Verfahrens zum Betreiben eines Antriebsstrangs eines Kraftfahrzeugs mit einem Gruppengetriebe CT, mit welchen auch dann, wenn bei fahrendem Kraftfahrzeug das Hauptgetriebe HG eine Neutralposition einnimmt und wenn am Antriebsaggregat A eine Störung festgestellt wird, sodass dasselbe zur Motorunterstützung für ein Gangeinlegen nicht zur Verfügung steht, ein Gang in dem Hauptgetriebe HG und damit im Gruppengetriebe eingelegt werden kann. Dies insbesondere dann möglich, wenn das Antriebsaggregat A stillsteht oder nicht angesteuert werden kann.

Dann, wenn bei fahrendem Kraftfahrzeug das Hauptgetriebe HG die Neutralposition einnimmt und am Antriebsaggregat A eine Störung, insbesondere ein Stillstand oder eine Nicht-Ansteuerbarkeit des Antriebsaggregats A, festgestellt wird, wird zum Einlegen eines Gangs so vorgegangen, dass einerseits die Nachschaltgruppe, die im gezeigten Ausführungsbeispiel der Fig. 1 als Bereichsgruppe GP ausgeführt ist, in eine Position überführt wird, in welcher die Nachschaltgruppe kraftflussfrei ist. Dann, wenn die Nachschaltgruppe kraftflussfrei ist, kann der Getriebeteil des Gruppengetriebes CT zwischen dem Hauptgetriebe HG und der als Bereichsgruppe ausgebildeten Nachschaltgruppe GP frei laufen und damit auslaufen.

Weiterhin wird ein Schaltzylinder des unsynchronisierten Hauptgetriebes HG mit einem Schaltimpuls beaufschlagt, sodass als Klauen ausgebildete Schaltelemente des Hauptgetriebes HG so lange übereinander ratschen, bis dieselben aufgrund einer sich verringernden Drehzahldifferenz einspuren.

Dann, wenn die als Klauen ausgebildeten Schaltelemente des Hauptgetriebes HG eingespurt sind, ist das Hauptgetriebe geschlossen und kann Kraft bzw. Moment übertragen.

Dann, wenn das Hauptgetriebe geschlossen ist, wird anschließend die Nachschaltgruppe, die im gezeigten Ausführungsbeispiel als Bereichsgruppe GP ausgeführt ist, wieder in eine nicht-kraftflussfreie Position überführt.

Das obige Beaufschlagen des Schaltzylinders des Hauptgetriebes HG mit dem Schaltimpuls kann entweder gleichzeitig mit dem Überführen der Nachschaltgruppe GP in die kraftflussfreie Position oder unmittelbar hieran anschließend erfolgen. In jedem Fall wird der Schaltzylinder des Hauptgetriebes HG rechtzeitig vor dem Stillstand der auslaufenden bzw. austrudelnden Nachschaltgruppe GP mit dem Schaltimpuls beaufschlagt, um eine Zahn-auf-Zahn-Stellung im Hauptgetriebe HG zu vermeiden.

Wie bereits ausgeführt, wird nach dem Schließen des Hauptgetriebes HG, welches durch Einspuren der als Klauen ausgebildeten Schaltelemente desselben erfolgt, die Nachschaltgruppe GP wieder in die nicht-kraftflussfreie Position überführt, und zwar vorzugsweise derart, dass die Nachschaltgruppe GP die Schnellfahrstufe S einnimmt.

Insbesondere dann, wenn die Nachschaltgruppe GP eine sogenannte 2-Quadranten-Synchroniserung nutzt, die nur in eine Drehrichtung wirkt, wird bei geschlossenem Hauptgetriebe HG zum Überführen der Nachschaltgruppe GP in die Schnellfahrstufe S so vorgegangen, dass die Nachschaltgruppe GP zunächst in Richtung auf die Langsamfahrstufe L betätigt wird, wobei hierbei eine Getriebeeingangsdrehzahl, nämlich die Drehzahl der Eingangswelle W_{GE} des Getriebes, überwacht wird.

Durch das Betätigen der Nachschaltgruppe GP in Richtung auf die Langsamfahrstufe L wirkt die 2-Quadranten-Synchroniserung und die Getriebeeingangsdrehzahl steigt an.

Mit einer 2-Quadranten-Synchroniserung, die nur in eine Drehrichtung wirkt, wird bei einer Rückschaltung von Schnell nach Langsam die Eingangsseite des Getriebes beschleunigt, wohingegen bei einer Hochschaltung von Langsam nach Schnell die Getriebeeingangsseite abgebremst wird. Da beim erfindungsgemäßen Verfahren beim Einlegen der Schnellfahrstufe S aus der kraftflussfreien Position der Nachschaltgruppe GP heraus die 2-Quadranten-Synchroniserung nicht wirksam wäre, wird, wie oben beschreiben, die Nachschaltgruppe GP zunächst in Richtung auf die Langsamfahrstufe L betätigt.

Dann, wenn die Getriebeeingangsdrehzahl, nämlich die Drehzahl der Eingangswelle W_{GE} des Getriebes, einen Grenzwert erreicht bzw. überschreitet, wird die Betätigung der Nachschaltgruppe GP in Richtung auf die Langsamfahrstufe L abgebrochen und anschließend die Nachschaltgruppe GP in Richtung auf die Schnellfahrstufe S betätigt. Hierdurch wird eine eventuell vorhandene Drehzahldifferenz abgebaut und die Nachschaltgruppe GP kann sofort in die nicht-kraftflussfreie Position, nämlich in die die Schnellfahrstufe S, überführt bzw. durchgeschaltet werden.

Das Abbrechen der Betätigung der Nachschaltgruppe GP in Richtung auf die Langsamfahrstufe L erfolgt dann, wenn der Getriebeeingang korrigiert um eine gegebenenfalls vorhandene Getriebeübersetzung schneller als der Achsantrieb AB dreht bzw. die Drehzahl der Eingangswelle W_{GE} korrigiert um eine gegebenenfalls vorhandene Getriebeübersetzung höher als die Drehzahl des Achsantriebs AB ist. Nach Abbrechen der Betätigung der Nachschaltgruppe GP in Richtung auf die Langsamfahrstufe L wird dieselbe unmittelbar anschließend in Richtung auf die Schnellfahrstufe S betätigt.

Das obige Betätigen der Nachschaltgruppe GP in Richtung auf die Langsamfahrstufe L sowie in Richtung auf die Schnellfahrstufe S erfolgt über als Ventile ausgebildete Schaltelemente der Nachschaltgruppe GP. Zum Betätigen der Nachschaltgruppe GP in Richtung auf die Langsamfahrstufe L wird ein Ventil für die Richtung der Langsamfahrstufe L angesteuert. Zum Betätigen der Nachschaltgruppe GP in Richtung auf die Schnellfahrstufe S wird ein Ventil für die Richtung der Schnellfahrstufe S angesteuert.

Nach dem Schließen des Hauptgetriebes HG kann die Nachschaltgruppe GP auch in die Langsamfahrstufe L überführt werden. Da die Funktion jedoch in der Regel bei hohen Fahrgeschwindigkeiten aktiv wird, ist dann ein Überführen der Nachschaltgruppe GP in die Schnellfahrstufe S nötig.

Bei Ausführung des erfindungsgemäßen Verfahrens wird die Trennkupplung K, die im gezeigten Ausführungsbeispiel der Fig. 1 zwischen das Antriebsaggregat A und die als Splitgruppe ausgebildete Vorschaltgruppe GV geschaltet ist, dann geöffnet, wenn das Hauptgetriebe HG durch Einspuren der Klauen geschlossen ist.

Dann, wenn die Trennkupplung K erst dann geöffnet wird, wenn das Hauptgetriebe HG bereits geschlossen ist, erfolgt das Schließen des Hauptgetriebes HG über das Ratschen und nachfolgende Einspuren der Schaltelemente des Hauptgetriebes HG bei geschlossener Trennkupplung K und bei kraftflussfreier Nachschaltgruppe GP.

Dann, wenn nach dem Schließen des Hauptgetriebes HG durch Ratschen und nachfolgendes Einspuren der Schaltelemente dasselbe geschlossen ist und wenn die Nachschaltgruppe GP wieder in die nicht-kraftflussfreie Position überführt ist, wird nachfolgend die Trennkupplung K wieder geschlossen, sodass dann das Antriebaggregat A angeschleppt wird.

Das erfindungsgemäße Verfahren ist sowohl bei Gruppengetrieben mit Vorschaltgruppe als auch bei Gruppengetrieben ohne Vorschaltgruppe einsetzbar. Bei Gruppengetrieben mit Vorschaltgruppe kann die oben beschriebene Funktion der Trennkupplung K, nämlich das Öffnen derselben und nachfolgende Schließen derselben, auch durch die zwischen die Trennkupplung K und das Hauptgetriebe HG geschaltete Vorschaltgruppe GV übernommen werden, indem dieselbe zunächst in eine kraftflussfreie Position und nachfolgend wieder in eine nicht-kraftflussfreie Position überführt wird. Die Verwendung der Trennkupplung K ist jedoch aus Verschleißgründen bevorzugt.

### Bezugszeichen

- Br: Getriebebremse
- CT: Gruppengetriebe
- G1: Übersetzungsstufe Vorwärtsfahrt
- G2: Übersetzungsstufe Vorwärtsfahrt
- G3: Übersetzungsstufe Vorwärtsfahrt
- GV: Splitgruppe
- GP: Bereichsgruppe
- HG: Hauptgetriebe
- K: Trennkupplung
- K1: Übersetzungsstufe
- K2: Übersetzungsstufe
- L: Langsamfahrstufe
- PS: Sonnenrad
- PT: Planetenträger
- PTO: Nebenabtrieb
- PH: Hohlrad
- R: Übersetzungsstufe Rückwärtsfahrt
- S: Schnellfahrstufe
- S1: Schaltpaket
- S2: Schaltpaket
- SP: Schaltpaket
- SV: Schaltpaket
- W_{GA}: Ausgangswelle
- W_{GE}: Eingangswelle
- W_{H}: Hauptwelle
- W_{VG1}: Vorgelegewelle
- W_{VG2}: Vorgelegewelle
- A: Antriebsaggregat
- AB: Achsantrieb

## Patentansprüche

1. Verfahren zum Betreiben eines Antriebsstrangs eines Kraftfahrzeugs, wobei der Antriebsstrang ein zwischen einem Antriebsaggregat (A) sowie einem Achsantrieb (AB) angeordnetes, automatisiertes Schaltgetriebe (CT) mit zumindest einem unsynchronisierten Hauptgetriebe (HG) und einer dem Hauptgetriebe (HG) antriebstechnisch nachgeschalteten, synchronisierten Nachschaltgruppe (CT) aufweist, wobei eine Eingangswelle (W_{GE}) des automatisierten Schaltgetriebes (CT) über eine steuerbare Trennkupplung (K) mit dem Antriebsaggregat (A) und eine Ausgangswelle (W_{GA}) des automatisierten Schaltgetriebes (CT) mit dem Achsantrieb (AB) in Verbindung steht, wobei dann, wenn bei fahrendem Kraftfahrzeug das Hauptgetriebe (HG) eine Neutralposition einnimmt und wenn am Antriebsaggregat (A) eine Störung, insbesondere ein Stillstand oder eine Nichtansteuerbarkeit des Antriebsaggregats (A), festgestellt wird, zum Einlegen eines Gangs einerseits die Nachschaltgruppe (GP) in eine Position überführt wird, in welcher die Nachschaltgruppe (GP) kraftflussfrei ist, sodass die Nachschaltgruppe (GP) auslaufen kann, und andererseits ein Schaltzylinder des Hauptgetriebes (HG) mit einem Schaltimpuls beaufschlagt wird, sodass Schaltelemente des Hauptgetriebes (HG) solange übereinander ratschen, bis dieselben auf Grund einer sich verringernden Drehzahldifferenz einspuren und so das Hauptgetriebe (HG) schließen, wobei dann, wenn das Hauptgetriebe (HG) geschlossen ist, die Nachschaltgruppe (GV) in eine nicht-kraftflussfreie Position überführt wird, **dadurch gekennzeichnet, dass** hierbei die Trennkupplung (K) dann geöffnet wird, wenn das Hauptgetriebe (HG) geschlossen ist, sodass das Schließen des Hauptgetriebes (HG) über das Ratschen und nachfolgende Einspuren der Schaltelemente des Hauptgetriebes (HG) bei geschlossener Trennkupplung (K) und bei kraftflussfreier Nachschaltgruppe (GP) erfolgt.

2. Verfahren nach Anspruch 1, **dadurch gekennzeichnet, dass** die Trennkupplung (K) dann wieder geschlossen wird, wenn nach dem Schließen des Hauptgetriebes (HG) die Nachschaltgruppe (GP) wieder in die nichtkraftflussfreie Position überführt ist, sodass dann das Antriebsaggregat (A) angeschleppt wird.

3. Verfahren nach Anspruch 1 oder 2, **dadurch gekennzeichnet, dass** nach dem Schließen des Hauptgetriebes (HG) die Nachschaltgruppe (GP) derart in die nicht-kraftflussfreie Position überführt wird, dass dieselbe in eine Schnellfahrstufe (S) geschaltet wird.

4. Verfahren nach Anspruch 3, **dadurch gekennzeichnet, dass** hierzu die Nachschaltgruppe (GP) zunächst in Richtung auf eine Langsamfahrstufe (L) betätigt wird, wobei hierbei eine Getriebeeingangsdrehzahl überwacht wird, und wobei dann, wenn die Getriebeeingangsdrehzahl einen Grenzwert erreicht bzw. überschreitet, die Betätigung der Nachschaltgruppe (GP) in Richtung auf die Langsamfahrstufe (L) abgebrochen und anschließend die Nachschaltgruppe (GP) in Richtung auf die Schnellfahrstufe (S) betätigt wird.

5. Verfahren nach Anspruch 4, **dadurch gekennzeichnet, dass** hierzu zunächst ein Schaltelement angesteuert wird, über welches die Nachschaltgruppe (GP) in die Langsamfahrstufe (L) schaltbar ist, wobei dann, wenn die Getriebeeingangsdrehzahl korrigiert um eine gegebenenfalls vorhandene Getriebeübersetzung schneller als der Achsantrieb (AB) dreht, das Schaltelement für die Langsamfahrstufe (L) abgeschaltet und unmittelbar ein Schaltelement angesteuert wird, über welches die Nachschaltgruppe (GP) in die Schnellfahrstufe (S) schaltbar ist.

6. Verfahren nach Anspruch 1 oder 2, **dadurch gekennzeichnet, dass** nach dem Schließen des Hauptgetriebes (HG) die Nachschaltgruppe (GP) derart in die nicht-kraftflussfreie Position überführt wird, dass dieselbe in eine Langsamfahrstufe (L) geschaltet wird.

7. Verfahren nach einem der Ansprüche 1 bis 6, **dadurch gekennzeichnet, dass** das Beaufschlagen des Schaltzylinders des Hauptgetriebes (HG) mit dem Schaltimpuls entweder gleichzeitig mit dem Überführen der Nachschaltgruppe (GP) in die kraftflussfreie Position oder unmittelbar hieran anschließend erfolgt.

## Claims

1. Method for operating a drive train of a motor vehicle, wherein the drive train has an automatic transmission (CT) which is arranged between a drive unit (A) and an axle drive (AB) and has at least one unsynchronized main transmission (HG) and a synchronized rear-mounted group (CT) with a drive connection to the rear of the main transmission (HG), wherein an input shaft (W_{GE}) of the automatic transmission (CT) is connected to the drive unit (A) via a controllable clutch (K) and an output shaft (W_{GA}) of the automatic transmission (CT) is connected to the axle drive (AB), wherein the main transmission (HG) assumes a neutral position when the motor vehicle is driving, and if a fault, in particular a stationary state or inability to actuate the drive unit (A) is detected at the drive unit (A), in order to engage a gear speed, on the one hand, the rear-mounted group (GP) is moved into a position in which the rear-mounted group (GP) is free of frictional engagement, with the result that the rear-mounted group (GP) can coast to a standstill, and, on the other hand, a shifting cylinder of the main transmission (HG) is subjected to a shifting pulse, with the result that shifting elements of the main transmission (HG) ratchet one on top of the other until they engage owing to a reducing difference in rotational speed and therefore close the main transmission (HG), wherein when the main transmission (HG) is closed the rear-mounted group (GV) is moved into a position in which it is not free of frictional engagement, **characterized in that** in this context the clutch (K) is opened when the main transmission (HG) is closed, with the result that the closing of the main transmission (HG) by means of the ratcheting and subsequent engagement of the shifting elements of the main transmission (HG) takes place when the clutch (K) is closed and the rear-mounted group (GP) is free of frictional engagement.

2. Method according to Claim 1, **characterized in that** the clutch (K) is closed again if, after the closing of the main transmission (HG), the rear-mounted group (GP) is moved again into the position in which it is not free of frictional engagement, with the result that the drive unit (A) is then tow-started.

3. Method according to Claim 1 or 2, **characterized in that** after the closing of the main transmission (HG) the rear-mounted group (GP) is moved into the position in which it is not free of frictional engagement in such a way that the latter is shifted into a high-speed stage (S).

4. Method according to Claim 3, **characterized in that** for this purpose the rear-mounted group (GP) is firstly activated in the direction of a low-speed stage (L), wherein in this context a transmission input rotational speed is monitored, and wherein when the transmission input rotational speed reaches or exceeds a limiting value, the activation of the rear-mounted group (GP) in the direction of the low-speed stage (L) is aborted and the rear-mounted group (GP) is subsequently activated in the direction of the high-speed stage (S).

5. Method according to Claim 4, **characterized in that** for this purpose a shifting element is firstly actuated, by means of which shifting element the rear-mounted group (GP) can be shifted into the low-speed stage (L), wherein when the transmission input rotational speed rotates more quickly than the axle drive (AB) having been corrected by a transmission ratio which is present under certain circumstances, the shifting element for the low-speed stage (L) is switched off and immediately a shifting element by means of which the rear-mounted group (GP) can be shifted into the high-speed stage (S) is activated.

6. Method according to Claim 1 or 2, **characterized in that** after the closing of the main transmission (HG), the rear-mounted group (GP) is moved into the position in which it is not free of frictional engagement, in such a way that said rear-mounted group is shifted into a low-speed stage (L).

7. Method according to one of Claims 1 to 6, **characterized in that** the subjection of the shifting cylinder of the main transmission (HG) to the shifting pulse either occur simultaneously with the movement of the rear-mounted group (GP) into the position in which is free of frictional engagement or immediately subsequent thereto.

## Revendications

1. Procédé pour faire fonctionner une chaîne cinématique d'un véhicule automobile, la chaîne cinématique présentant une transmission à changement de vitesses automatisée (CT) disposée entre un groupe motopropulseur (A) et une commande d'essieu (AB) avec au moins une transmission principale non synchronisée (HG) et un groupe aval synchronisé (CT) monté en aval de la transmission principale (HG) par une technique d'entraînement, un arbre d'entrée (W_{GE}) de la transmission à changement de vitesses automatisée (CT) étant en liaison par le biais d'un embrayage de coupure commandable (K) avec le groupe motopropulseur (A) et un arbre de sortie (W_{GA}) de la transmission à changement de vitesses automatisée (CT) étant en liaison avec la commande d'essieu (AB), dans lequel, quand le véhicule automobile roule, la transmission principale (HG) adopte une position neutre et lorsque l'on remarque au niveau du groupe motopropulseur (A) une perturbation, en particulier un arrêt ou une impossibilité de commander le groupe motopropulseur (A), pour l'enclenchement d'une vitesse, d'une part le groupe aval (GP) est transféré dans une position dans laquelle le groupe aval (GP) est exempt d'engagement par force, de sorte que le groupe aval (GP) puisse sortir, et d'autre part un cylindre de commutation de la transmission principale (HG) est sollicité avec une impulsion de commutation de telle sorte que des éléments de commutation de la transmission principale (HG) s'encliquètent les uns sur les autres jusqu'à ce que ceux-ci s'engrènent du fait d'une différence de vitesse de rotation diminuant et ferment ainsi la transmission principale (HG), et dans lequel, lorsque la transmission principale (HG) est fermée, le groupe aval (GV) est transféré dans une position non exempte d'engagement par force, **caractérisé en ce que** dans ce cas l'embrayage de coupure (K) est ouvert lorsque la transmission principale (HG) est fermée, de telle sorte que la fermeture de la transmission principale (HG) s'effectue par le biais de l'encliquetage et de l'engrènement subséquent des éléments de commutation de la transmission principale (HG) lorsque l'embrayage de coupure (K) est fermé et que le groupe aval (GP) est exempt d'engagement par force.

2. Procédé selon la revendication 1, **caractérisé en ce que** l'embrayage de coupure (K) est refermé lorsque, après la fermeture de la transmission principale (HG), le groupe aval (GP) est à nouveau transféré dans la position non exempte d'engagement par force, de sorte que le groupe motopropulseur (A) soit entraîné.

3. Procédé selon la revendication 1 ou 2, **caractérisé en ce qu'**après la fermeture de la transmission principale (HG), le groupe aval (GP) est transféré dans la position non exempte d'engagement par force de telle sorte que celui-ci soit commuté dans un étage de conduite rapide (S).

4. Procédé selon la revendication 3, **caractérisé en ce qu'**à cet effet, le groupe aval (GP) est d'abord actionné dans la direction d'un étage de conduite lente (L), une vitesse de rotation d'entrée de la transmission étant dans ce cas surveillée, et lorsque la vitesse de rotation d'entrée de la transmission atteint ou dépasse une valeur limite, l'actionnement du groupe aval (GP) dans la direction de l'étage de conduite lente (L) étant interrompu et le groupe aval (GP) étant ensuite actionné dans la direction de l'étage de conduite rapide (S).

5. Procédé selon la revendication 4, **caractérisé en ce qu'**à cet effet un élément de commutation est d'abord commandé, par le biais duquel le groupe aval (GP) peut être commuté dans l'étage de conduite lente (L), et lorsque la vitesse de rotation d'entrée de la transmission, corrigée d'une démultiplication de transmission éventuellement prévue, tourne plus vite que la commande d'essieu (AB), l'élément de commutation pour l'étage de conduite lente (L) étant coupé et un élément de commutation étant immédiatement commandé, par le biais duquel le groupe aval (GP) peut être commuté dans l'étage de conduite rapide (S).

6. Procédé selon la revendication 1 ou 2, **caractérisé en ce qu'**après la fermeture de la transmission principale (HG) le groupe aval (GP) est transféré dans la position non exempte d'engagement par force de telle sorte que celui-ci est commuté dans un étage de conduite lente (L).

7. Procédé selon l'une quelconque des revendications 1 à 6, **caractérisé en ce que** la sollicitation du cylindre de commutation de la transmission principale (HG) avec l'impulsion de commutation s'effectue soit simultanément avec le transfert du groupe aval (GP) dans la position exempte d'engagement par force soit immédiatement après celui-ci.
